Europäisches Patentamt

European Patent Office

Office européen des brevets

(11) Publication number: **0 387 963**
**A1**

# EUROPEAN PATENT APPLICATION

(21) Application number: **90200597.4**

(51) Int. Cl.⁵: **H02G 1/08, G02B 6/44**

(22) Date of filing: **13.03.90**

(30) Priority: **16.03.89 NL 8900650**

(43) Date of publication of application:
**19.09.90 Bulletin 90/38**

(84) Designated Contracting States:
**AT BE CH DE DK ES FR GB GR IT LI LU NL SE**

(71) Applicant: **WAVIN B.V.**
**Händellaan 251**
**NL-8031 EM Zwolle(NL)**

(72) Inventor: **van Nes, Jan Aert**
**12, Brinkberg**
**NL-7772 EZ Hardenberg(NL)**
Inventor: **Cazemier, Rene Theo**
**20, De Kamphof**
**NL-7772 EH Hardenberg(NL)**

(74) Representative: **van der Veken, Johannes**
**Adriaan et al**
**EXTERPATENT B.V. P.O. Box 90649**
**NL-2509 LP 's-Gravenhage(NL)**

(54) **Method for introducing a telecommunication cable, in particular an optical fibre cable, into a cable conduit using a liquid lubricant and also a lubricant suitable for this purpose.**

(57) A mixture of paraffin oil and a petroleum jelly for use as lubricant in a method of introducing an optical fibre cable into a cable conduit. The ratio of paraffin oil to petroleum jelly is comprised between 30:70 and 70:30, preferably 1:1.

The lubricant may be applied in a cable conduit before introducing said telecommunication cable.

The cable is introduced into the cable conduit by means of a pulling cable or a blowing system, preferably at the assembly site.

The cable conduit may have a smooth or corrugated inner wall.

FIG.2.

EP 0 387 963 A1

## Method for introducing a telecommunication cable, in particular an optical fibre cable, into a cable conduit using a liquid lubricant and also a lubricant suitable for this purpose.

The present invention relates to a method for introducing a telecommunication cable, in particular an optical fibre cable, into a cable conduit using a liquid, hydrocarbon-based lubricant.

Such a method is known from the US patent specification 4,565,351. Said patent specification describes a method for introducing an inner tube into a sheating tube and a cable into the inner tube. In carrying out said method, a lubricant is used which is composed of polypropylene glycol, polyethylene oxide and water.

Said lubricant has the disadvantage that, if it is used for introducing optical fibre cables into a cable conduit, the water present adversely affects the operation of the optical fibre cable. Specifically, water which interferes with the light beam through the optical fibre cable will be sucked up into the fibre structure of the optical fibre cable as a result of the capillary action of the small channels. In addition, only limited lengths of inner tube or cable can be pulled or blown into a tube with the mixture of lubricants mentioned.

The object of the present invention is now to provide a solution for the abovementioned disadvantages and is characterized for this purpose in that the lubricant comprises a mixture of paraffin oil and a petroleum jelly.

The lubricant does not contain any water, does not settle and, in addition, has the advantage that, compared with the prior art, appreciably longer optical fibre cables can be introduced into a cable conduit in one step.

It is pointed out that the use of an anhydrous lubricant is known per se from the European patent application 0,221,481, but in this case the lubricant is composed of a mixture of silicone oil containing solid globules of foam glass, polyethylene or polypropylene. Such a mixture is more difficult to produce and to handle in the desired form, and yields poorer results than the lubricant used according to the invention.

Advantageously, the ratio of paraffin oil to petroleum jelly in the mixture is between 30:70 and 70:30, and preferably this ratio is 1:1.

From experimental data appears that the abovementioned ratio of paraffin oil to petroleum jelly in the mixture of 1:1 yields the best results. These tests are described in more detail below.

Preferably, the petroleum jelly of the abovementioned mixture is vaseline. In the description below, the mixture of paraffin oil and vaseline having a ratio of 1:1 will be designated mixture A, which lubricant mixture yielded the best results in the tests in which a length of optical fibre cable is introduced into a cable conduit using a lubricant.

Here paraffin oil is understood to mean a petroleum fraction composed of a mixture of approximately ten different hydrocarbons which each contain 10 to 16 carbon atoms per molecule, inter alia n-dodecane, alkylbenzenes and naphthalene. Vaseline is understood to mean a semi-solid mixture of saturated hydrocarbons (primarily $C_{22}H_{46}$ and $C_{23}H_{48}$) which is also obtained from petroleum or petroleum products. Vaseline is per se a good lubricant, but it is difficult to spread due to the high viscosity thereof..

The method according to the invention is suitable either for a cable conduit having a smooth interior wall or for a tube having an interior wall provided with corrugations. In the case of both types of tubes, the use of the lubricant mixture described above results in a considerably improved action in introducing an optical fibre cable.

A cable can be introduced into the cable conduit before installment, as then the cable can be assembled at the assembly site itself without the cable first having to be introduced into the cable conduit, and this may be advantageous in certain cases.

Preferably, a cable is introduced into the cable conduit at the assembly site. This has the advantage that the optical fibre cable cannot be damaged during cable conduit assembly since the optical fibre cable is not yet contained therein. After assembly of the cable conduit, the cable can be introduced into the cable conduit using the abovementioned lubricant according to the invention.

A cable can be introduced into the cable conduit in various ways. Thus, a cable can be pulled by means of a pulling cable into the cable conduit or can be introduced into the cable conduit with the aid of a blowing method. Both methods are known. The introduction of a cable with the aid of a pulling cable is described in the abovementioned US patent specifica tion 4,565,351. The introduction of the cable into a cable conduit with the aid of a blowing method is described in the Dutch patent application 8701002. The lubricant can be introduced into the cable conduit at the assembly site or in the factory. The cable conduit is preferably composed of a thermoplastic, in particular of a polyolefin. Suitable polyolefins are polyethylene and polypropylene.

The invention also relates to a mixture of paraffin oil and a petroleum jelly for use as lubricant for introducing an optical fibre cable into a cable conduit.

The invention furthermore relates to a cable conduit, having a lubricant on its inside, for receiving a telecommunication cable, in particular an optical fibre cable, characterized in that a lubricant according to the invention is used.

Preferably, the ratio of paraffin oil to petroleum jelly in the mixture is 1:1; advantageously, the petroleum jelly is vaseline.

The method according to the invention will be explained hereinafter with reference to the drawing in which:

Figure 1 shows a diagram of an optical fibre cable length which was used for a practical test, and

Figure 2 shows diagrammatically an optical fibre cable inside a tube having ribs extending in the longitudinal direction of said tube.

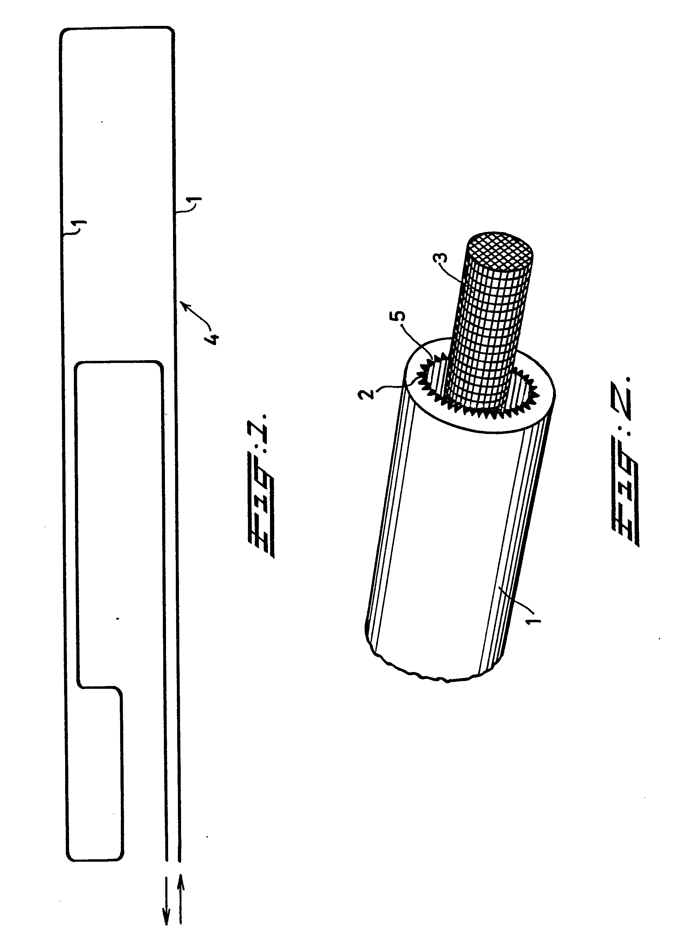

Figure 1 shows a length 4 which was used to carry out a practical test. The total length of the cable conduit was 1000 metres and eight bends having a bending radius of R of 1 metre have been incorporated. Four such lengths were laid out, two of smooth polyethylene tubes and two of polyethylene tubes corrugated in the longitudinal direction, without special care being taken over taut laying of the straight sections or over the unevenness in the vertical plane. The cables were introduced into the cable conduits 1 with the aid of the abovementioned blowing method using a lubricant according to the prior art and a lubricant according to the invention.

Tests and results

a) Smooth tube containing paraffin oil.

Just before the introduction of a cable, 1 litre of paraffin oil was introduced into the tube, after which the cable was manually inserted over approximately 30 metres. After that, it was not possible to blow the cable further.

b) Corrugated tube containing paraffin oil.

Here again, 1 litre of paraffin oil was introduced into the cable conduit just before the introduction of the cable into the cable conduit 1. Although this cable began to move it seized up at 300 metres. The average speed was 20 m/min.

c) Corrugated tube containing Mixture A.

This corrugated tube was provided in the factory with the lubricant Mixture A, a mixture of paraffin oil and vaseline (1:1). Using the said lubricant, the cable traversed 1000 metres of cable conduit without interruption at an average speed of 28.5 m/min. A striking fact was that, as a whole, the speed did not decrease even when passing a right-angle bend.

d) Smooth tube containing Mixture A.

This tube was also provided with the mixture of lubricants in the factory. It was possible to blow a cable up to 860 metres with an average speed of 24.5 m/min.

Approximately 2 hours after carrying out the blowing-in tests, the cables were blown out of the tubes again. Here again, the corrugated tube containing Mixture A gave the best results, it even being necessary to considerably reduce the supply of air regularly because the cable blow-out speed exceeded the reeling speed.

Table 1 lists the static and dynamic coefficients of friction of smooth tubes containing three types of lubricant: paraffin oil, vaseline and silicone oil compared with the Mixture A used according to the invention.

3

Table 1

| Lubricant | f dyn | f stat |
|-----------|-------|--------|
| paraffin oil | 0.15 | 0.22 |
| vaseline | 0.10 | 0.12 |
| silicone oil | 0.11 | 0.17 |
| Mixture A | 0.11 | 0.11 |

From the above table and the preceding tests it is evident that the mixture according to the present invention is an excellent lubricant for use as a lubricant for introducing an optical fibre cable into a cable conduit.

Figure 2 shows a corrugated polyethylene cable conduit containing lubricant 2 and optical fibre cable 3; the corrugations are on the inside of the tube and extend in the longitudinal direction of the tube.

**Claims**

1. Method for introducing a telecommunication cable, in particular an optical fibre cable, into a cable conduit using a liquid, hydrocarbon-based lubricant, **characterized in that** the lubricant comprises a mixture of paraffin oil and a petroleum jelly.

2. Method according to Claim 1, **characterized in that** the ratio of paraffin oil to petroleum jelly in the mixture is between 30:70 and 70:30, and is preferably 1:1.

3. Method according to Claim 1 or 2, **characterized in that** the petroleum jelly is vaseline.

4. Method according to any one of Claims 1-3, **characterized in that** the cable conduit has a smooth interior wall or an interior wall provided with corrugations.

5. Method according to any one of Claims 1-4, **characterized in that** the cable can be introduced into the cable conduit before installation or introduced into the cable conduit at the assembly site and preferably the cable is pulled into the cable conduit with a pulling cable or with the aid of a blowing system.

6. Method according to any one of Claims 1-5, **characterized in that** the cable conduit is composed of a thermoplastic, in particular a polyolefin.

7. Mixture of paraffin oil and a petroleum jelly for use as lubricant for introducing an optical fibre cable into a cable conduit.

8. Mixture according to Claim 7, **characterized in that** the ratio of paraffin oil to petroleum jelly in the mixture is between 30:70 and 70:30, and is preferably 1:1.

9. Mixture according to Claim 8, **characterized in that** the petroleum jelly is vaseline.

10. Cable conduit, having a lubricant on its inside, for receiving a telecommunication cable, in particular an optical fibre cable, **characterized in that** a lubricant according to any one of Claims 7-9 is used.

_Fig:1._

_Fig:2._

EP 0 387 963 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1242013 (THE POST OFFICE)<br>* page 1, lines 81 - 90 *<br>* page 2, lines 1 - 14 *<br>* page 2, lines 81 - 95; figures 1, 2 * | 1, 5, 10 | H02G1/08<br>G02B6/44 |
| A | IEEE JOURNAL ON SELECTED AREAS IN COMMUNICATION. vol. SAC-4, no. 5, August 1986, NEW YORK US pages 686 - 690; G.C. WEITZ: "PREDICTION AND MINIMIZATION OF FIBER OPTIC CABLE PULLING TENSIONS"<br>* page 686, right-hand column, paragraph 5 *<br>* page 687, left-hand column *<br>* page 687, right-hand column, paragraph 1 * | 1, 10 | |
| A,D | EP-A-0221481 (WAVIN)<br>* claims 1-4, 14; figure 5 * | 1, 4-6, 10 | |
| A | DE-A-1415474 (SIEMENS)<br>* page 3, paragraph 2; figure 1 * | 1, 4, 5, 7, 10 | |
| | | | TECHNICAL FIELDS SEARCHED (Int. Cl.5 )<br><br>H02G<br>G02B |

The present search report has been drawn up for all claims

| Place of search | Date of completion of the search | Examiner |
|---|---|---|
| THE HAGUE | 14 JUNE 1990 | LOMMEL A. |